# EUROPEAN PATENT SPECIFICATION

(11) **EP 3 895 826 B1**
(45) Date of publication and mention of the grant of the patent: **18.12.2024**
(21) Application number: 19895146.9
(22) Date of filing: 10.06.2019
(51) Int. Cl.: B22C 9/10, B22C 9/24, B23B 1/00, B22C 9/02, B23P 15/00, F16C 3/02

(54) **METHOD FOR PRODUCING SHAFT, AND CASTING MOLD ASSEMBLY**
VERFAHREN ZUR HERSTELLUNG EINER WELLE UND GUSSFORMANORDNUNG
PROCÉDÉ DE PRODUCTION D'UN ARBRE, ET ENSEMBLE DE MOULE DE COULÉE

(30) Priority: 13.12.2018 JP 2018233187
(43) Date of publication of application: 20.10.2021
(73) Proprietor: Nishioka Malleable Iron Ind. Co., Ltd., Inabe-shi, Mie 511-0504 (JP)
(72) Inventor: NISHIOKA, Manabu, Inabe-shi, Mie 511-0504 (JP)
(74) Representative: McWilliams, David John
(86) International application number: PCT/JP2019/022863
(87) International publication number: WO 2020/121557

(56) References cited:
- CN-U- 205 236 962
- JP-A- 2001 030 046
- JP-A- H1 148 001
- JP-A- S55 122 649
- JP-A- S59 229 258
- US-A1- 2007 235 156

## Description

### [TECHNICAL FIELD]

The present disclosure relates to a method for producing a long-length shaft, and a mold assembly for use in this method. The shaft has a cast hole, which extends in a longitudinal direction of the shaft, as a hollow structure. The shaft may be produced using casting techniques.

### [BACKGROUND]

Motors and engines generally include a long-length shaft, which rotates inside of them. Conventionally, a hollow structure, which extends in a longitudinal direction of the shaft, has been desired to be provided in motors or engines due to a variety of reasons. A prior art is known to meet this demand. In the art, a shaft is formed with a casting having a cast hole. The cast hole can be utilized as a hollow structure. However, since a shaft formed by casting has low processing accuracy, a grinding step is required after the casting step to improve the processing accuracy of the shaft. Such a prior art is disclosed in, for example, Japanese Unexamined Patent Application Publication No. 01-148474. JPS5 512264 9A relates to a method of casting a crankshaft for an engine having a hollow having both ends opened in a tongue portion and a journal portion.
CN205236962U relates to a mandrel integral sand core casting mold of an ultra-long hollow camshaft.

### [SUMMARY]

However, in the above-described prior art, since the axial center of the shaft can deviate in the grinding step, it is difficult to accurately center the cast shaft. Additionally, a peripheral wall of the cast hole is generally thinner than the other parts of the shaft. Thus, thickness of the peripheral wall could have unignorable deviations.

The present application discloses a mold assembly and a method for producing a shaft. This method and the mold assembly allows for decreasing the possibility that unignorable deviations in the thickness of the peripheral wall of the cast hole occur when producing a shaft having a cast hole using casting techniques.

According to a feature of the present disclosure, a method for producing a long-length shaft having a cast hole extending in its longitudinal direction as a hollow structure is provided. This method for producing the shaft includes a preparation step for preparing a mold assembly. In the mold assembly, a first split core mold is fitted into a second split core mold. The first split core mold is configured to form a casting surface of the cast hole. The second split core mold is configured to form a peripheral wall portion. The peripheral wall portion forms at least a part of a peripheral wall of the cast hole. As a result, the first split core mold is fixed so as not to move relative to the second split core mold. The second split core mold fitted into the first split core mold is fitted in a main mold. The main mold is configured to form a portion other than the peripheral wall portion and the casting surface of the shaft. As a result, the second split core mold is fixed so as not to move relative to the main mold. The method for producing the shaft includes a casting step where molten metal is poured into the mold assembly so as to cast the shaft. The method for producing the shaft includes a first turning step. In the first turning step, the peripheral wall portion of the shaft, which was obtained in the casting step, is held by a holding device of a lathe. Then, an outer surface of a predetermined portion, which is a part of the portion other than the peripheral wall portion in the shaft is turned by setting an outer surface of the peripheral wall portion as a reference surface. The method for producing the shaft includes a second turning step. In the second turning step, the predetermined portion of the shaft after the first turning step is held by the holding device of the lathe, so as to turn a portion other than the predetermined portion of the shaft. This is done by setting the outer surface of the predetermined portion as a reference surface. The first split core mold comprises a body having a long columnar shape and a core portion protruding from said body. A tip of the core portion comprises a through tenon. The second split core mold is generally cylindrically formed so as to form a generally cylindrical peripheral wall portion and comprises a tenon groove configured to correspond to the through tenon. The through tenon is inserted in the tenon groove such that the first split core mold is fixed so as not to move relative to the second split core mold.

According to the above-mentioned method for producing the shaft, a peripheral wall portion forming at least a part of the peripheral wall of the cast hole of the shaft obtained by casting is formed by the first split core mold and the second split core mold. The shaft is turned by setting the peripheral wall portion as a reference used for centering. Since the first split core mold is fixed so as not to move relative to the second split core mold, the wall thickness of the peripheral wall is defined by the first split core mold and the second split core mold. Thus, it is possible to decrease the possibility that the peripheral wall of the cast hole has an unignorable deviation in wall thickness. There is typically a higher possibility that such a deviation can occur when producing a shaft having a cast hole using casting technique.

In one preferred embodiment of the method for producing the shaft described above, in the preparation step, it is preferable a mold assembly is prepared in which the main mold is a sand mold and that both the first split core mold and the second split core mold are prepared using a sand hardening type mold having a higher dimensional accuracy of casting than the sand mold.

As used herein, the term "sand mold" refers to a mold formed to be collapsed after a single casting. The sand mold may be obtained by compacting casting sand, to which an additive such as bentonite may be added. The sand mold generally allows for improving a production speed of the casting mold. The sand mold also generally allows for reducing the production cost, as compared with the other type of molds, such as a metal mold. Additionally, the sand mold may be reused after casting, for instance by recovering the casting sand that was used in forming the sand mold. The term "sand hardening type mold" refers to a mold formed to be collapsed after a single casting. The sand hardening type mold is formed so as to collapse after a single casting. The sand hardening type mold can be formed by hardening molding sand, to which a binder, such as a resin, may have been added. The sand hardening type mold generally allows for reducing the production cost as compared with the other type of molds, such as a metal mold. Additionally, the sand hardening type mold may be reused after casting, for instance by recovering the casting sand forming the sand mold. Furthermore, the sand hardening type mold has a higher dimensional accuracy of casting than the sand mold. For example, the sand hardening type mold may be a shell mold, a cold box mold, or a carbon dioxide curing mold.

That is, according to the above-described preferred embodiment, a portion other than the peripheral wall portion of the shaft obtained by casting is formed by a sand mold. The peripheral wall portion is formed by a sand hardening type mold having higher dimensional accuracy of casting than the sand mold. Thus, while using a sand mold for casting the shaft, the dimensional accuracy of casting of the peripheral wall portion may be improved by use of a sand hardening type mold. In the above-described preferred embodiment, the peripheral wall portion serves as a reference for centering. As a result, in addition to achieving the above-mentioned merit, we can produce a shaft having improved dimensional accuracy.

A mold assembly used when producing a long-length shaft having a cast hole extending in its longitudinal direction as a hollow structure is disclosed. The mold assembly includes a first split core mold for forming a casting surface of a cast hole. The mold assembly also includes a second split core mold for forming a peripheral wall portion forming at least a part of the peripheral wall of the cast hole. The mold assembly also includes a main mold for forming a portion other than the peripheral wall portion and other than the casting surface of the shaft. The first split core mold is fitted into the second split core mold so as not to move relative to the second split core mold. The second split core mold, into which the first split core mold is fitted, is fitted into the main mold so as not to move relative to the main mold. The first split core mold comprises a body having a long columnar shape and a core portion protruding from said body. A tip of the core portion comprises a through tenon. The second split core mold is generally cylindrically formed so as to form a generally cylindrical peripheral wall portion and comprises a tenon groove configured to correspond to the through tenon. The through tenon is inserted in the tenon groove such that the first split core mold is fixed so as not to move relative to the second split core mold.

According to the above mold assembly, a peripheral wall portion forming at least a part of the peripheral wall of the cast hole of the shaft obtained by casting using the mold assembly is formed by the first split core mold and the second split core mold. Since the first split core mold is fixed so as not to move relative to the second split core mold, the wall thickness of the peripheral wall is defined by the first split core mold and the second split core mold. Thus, it is possible to decrease possibility that the peripheral wall of the cast hole has an unignorable deviation in wall thickness. When producing a shaft having the cast hole using typical casting techniques, such a deviation may occur.

In one preferred embodiment of the mold assembly described above, it is preferable that the first split core mold is provided with a recess for forming a protrusion on the casting surface, so as to improve the strength of the peripheral wall.

In this case, in the shaft obtained by casting using the above mold assembly, a protrusion is formed on the casting surface of the cast hole. The protrusion improves the strength of the peripheral wall of the cast hole. In other words, the strength of the peripheral wall of the shaft produced using the mold assembly may be enhanced by the inclusion of the protrusion. The cast hole is a hollow structure in the shaft. The casting surface is difficult to see from the outside. Thus, the strength of the entire shaft can be improved by strengthening the peripheral wall of the cast hole, which is a relatively weak portion in the shaft, without significant changes in the appearance and/or weight of the shaft.

### [BRIEF DESCRIPTION OF THE DRAWINGS]

[FIG. 1] FIG. 1 is a front view showing a shaft produced by a method for producing a shaft according to an embodiment of the present disclosure.
[FIG. 2] FIG. 2 is a plan view showing the shaft of FIG. 1.
[FIG. 3] FIG. 3 is a perspective view showing the method for producing a shaft of the embodiment, and showing a step of fitting a first split core mold into a second split core mold.
[FIG. 4] FIG. 4 is a cross-sectional view of a main part showing the method for producing a shaft of the embodiment, and showing a step of producing an upper main mold and a lower main mold.
[FIG. 5] FIG. 5 is a perspective view showing the method for producing a shaft of the embodiment, and showing a preparation step of the present disclosure.
[FIG. 6] FIG. 6 is a perspective view showing the method for producing a shaft of the embodiment, and showing a casting step of the present disclosure.
[FIG. 7] FIG. 7 is a plan view showing the method for producing a shaft of the embodiment, and showing a first lathe turning step of the present disclosure.
[FIG. 8] FIG. 8 is a plan view showing the method for producing a shaft of the embodiment, and showing a second lathe turning step of the present disclosure.

### [MODES FOR CARRYING OUT THE INVENTION]

Hereinafter, an embodiment of the present disclosure will be described with reference to the drawings.

First, a shaft 10 produced by the method for producing the shaft according to one embodiment of the present disclosure will be described. The shaft 10 can be used as a motor shaft of a motor (not shown) that serves as a driving force source in an electric vehicle.

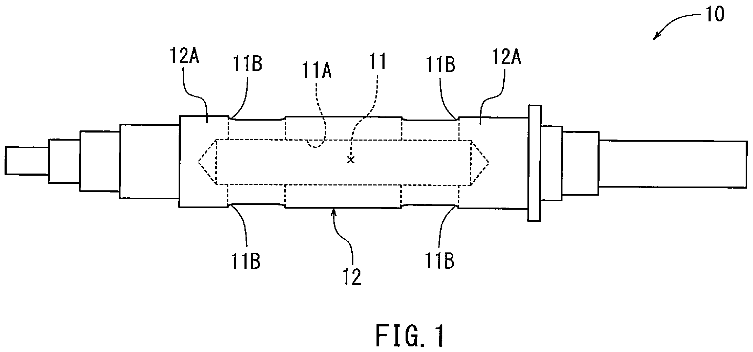

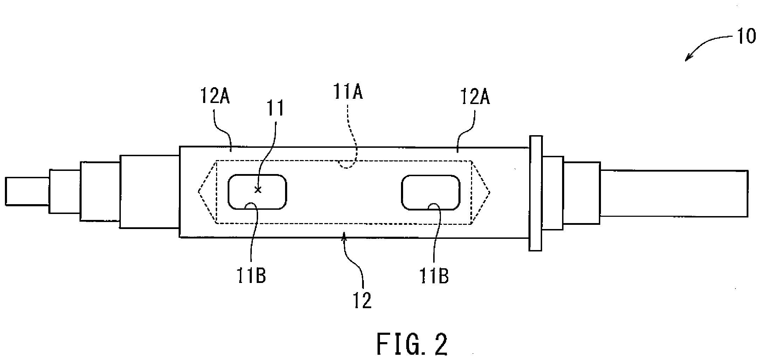

As shown in FIGS. 1 and 2, the shaft 10 may be formed to have a long length. The shaft 10 has a cast hole 11, which extends in the longitudinal direction of the shaft 10 (left-right direction in FIG. 1), as hollow structure. This hollow structure allows for reducing the weight of the shaft 10. The cast hole 11 is surrounded by a peripheral wall 12 in the radial direction of the shaft 10. The peripheral wall 12 is provided with openings 11B. The cast hole 11 is in communicate with a space outside the shaft 10 via the openings 11B. In this embodiment, the opening 11B is provided at four positions on the peripheral wall 12, so as to form two parallel through-holes extending in a direction perpendicular to the longitudinal direction of the shaft 10.

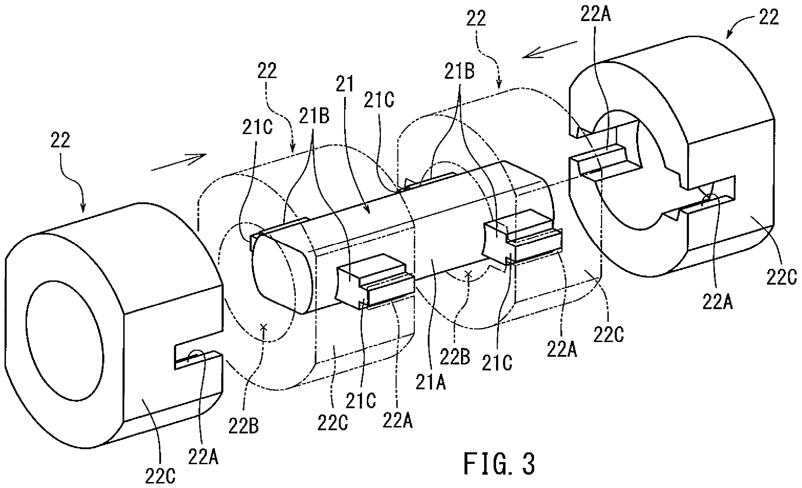

A method for producing the shaft 10 will now be described. In this method, at first, a producer of the shaft 10 (not shown; hereinafter, may be simply referred to as the "producer") prepares a first split core mold 21, an embodiment of which is shown by the solid line in FIG. 3. The first split core mold 21 can be used to form a casting surface 11A (see FIG. 2) of the cast hole 11 when the shaft 10 is being cast. The producer also prepares a second split core mold 22. The second split core mold 22 can be used to form a peripheral wall portion 12A(see FIG. 1) forming a part of the peripheral wall 12 when the shaft 10 is being cast. The first split core mold 21 and the second split core mold 22 are sand hardening type molds. A sand hardening type mold is formed so as to be collapsed after a single casting. The sand hardening type mold can be formed by hardening molding sand, for instance by including a binder, such as a resin. For example, the sand hardening type mold may be a shell mold, a cold box mold, or a carbon dioxide curing mold.

In this embodiment, the first split core mold 21 has a main body 21A, which has a long columnar shape. Thus, the cast hole 11 (see FIG. 2) can be formed into the long columnar space. The main body 21Ais provided with a core portion 21B, which is a protrusion which may be used to form the opening 11B. The core portion 21B has a through tenon 21C at its tip portion. The through tenon 21C has a thin plate shape and extends in the direction in which the core portion 21B projects and extends in the longitudinal direction of the main body 21A.

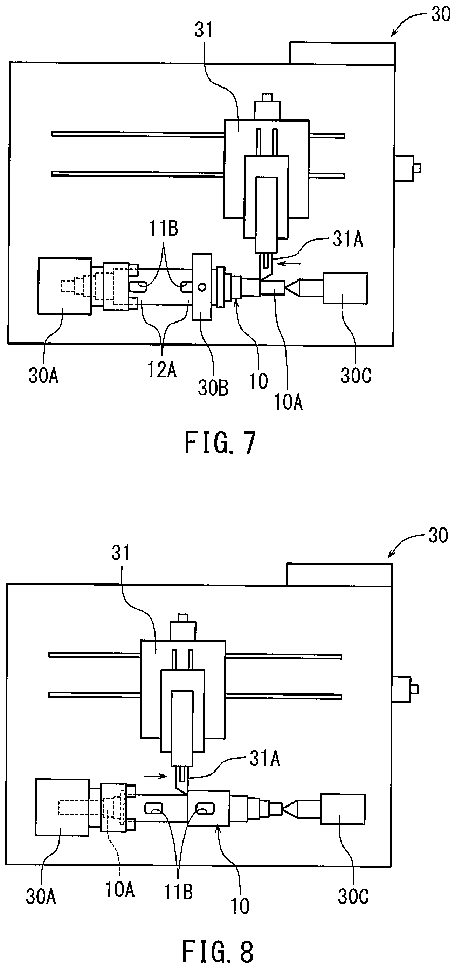

The second split core mold 22 is generally cylindrically formed so as to form a generally cylindrical peripheral wall portion 12A (see FIG. 7) by casting. The second split core mold 22 has a flat portion 22C. The flat portion 22C is configured to engage with the core portion 21B of the first split core mold 21. An outer surface of the flat portion 22C is flatter than the other portion of the second split core mold 22. The flat portion 22C is provided with a tenon groove 22A. The tenon groove 22A is configured to correspond to the through tenon 21C of the first split core mold 21. Thus, the flat portion 22C can be engaged with the core portion 21B of the first split core mold 21. Further, the through tenon 21C of the first split core mold 21can be inserted in the tenon groove 22A of the second split core mold 22. In this way, the first split core mold 21 can be fixed to or held against the second split core mold 22, so that they do not substantially move relative to each other.

The producer who prepared the first split core mold 21 and the second split core mold 22 may insert the through tenon 21C into the tenon groove 22A, as shown by the virtual line in FIG. 3. Accordingly, the first split core mold 21 can be fitted into the second split core mold 22. In this way, the first split core mold 21 can be fixed so as not to move relative to the second split core mold 22.

When the first split core mold 21 is fitted into the second split core mold 22, a gap 22B is formed between the second split core mold 22 and the main body 21A of the first split core mold 21. The gap 22B may be used to form the peripheral wall portion 12A by casting. The gap 22B may be set so that the peripheral wall portion 12A has a uniform wall thickness after completion of all of processes, in consideration of any potential casting deformations.

In this embodiment, a producer may prepare two second split core molds 22 for every first split core mold 21. The one first split core mold 21 may be sandwiched by the two second split core molds 22, so that the first split core mold 21 is fitted into the two second split core molds 22.

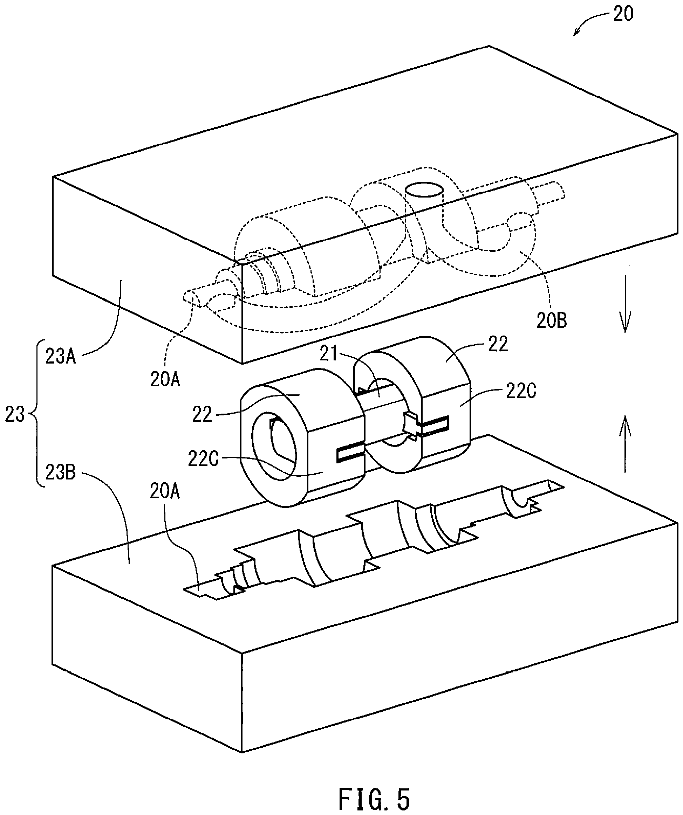

The producer, in addition to fitting the first split core mold 21 into the second split core molds 22, also prepares a main mold 23. The main mold 23 can be used for forming a portion of the shaft 10 other than the casting surface 11A of the cast hole 11 and the peripheral wall portion 12A of the shaft 10. As shown in FIG. 5, the main mold 23 is provided with a cavity 20A formed in a shape corresponding to the shaft 10. The cavity 20A is also structured in consideration of a space for setting the first and second split core molds 21, 22 and in consideration of potential casting deformations of the shaft 10. The main mold 23 includes a runner 20B, which is a cavity for pouring molten metal 91 into the cavity 20A.

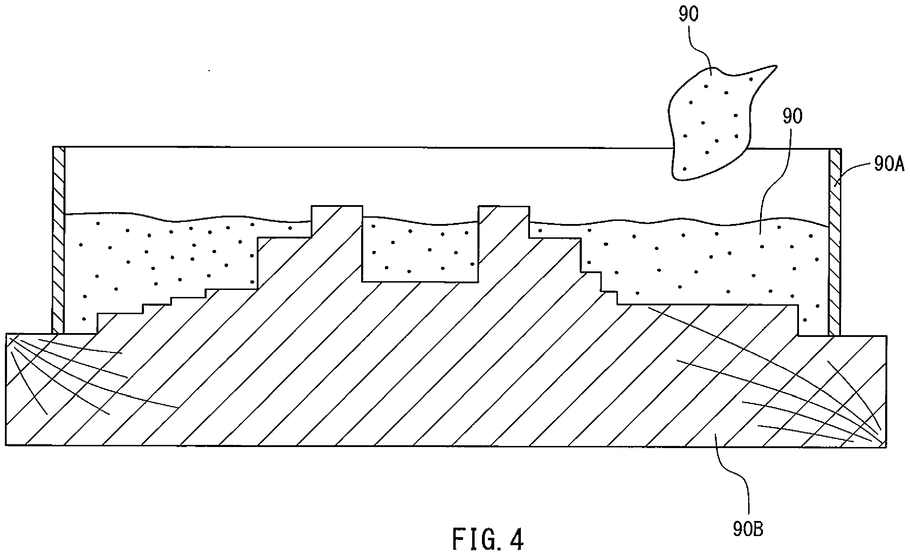

In this embodiment, the main mold 23 is composed of a combination of an upper main mold 23A and a lower main mold 23B. The upper and lower main molds 23A, 23B divide the cavity 20A into two in the vertical direction. The upper main mold 23A and the lower main mold 23B are formed in a substantially symmetrical shape, except for certain details, such as providing a space for the runner 20B. The upper main mold 23A and the lower main mold 23B may be produced by a method, such as that shown in FIG. 4. In this method, a master mold 90B is used. The master mold 90B has a protrusion on its upper surface. The protrusion is formed in the shape of the cavity, which should correspond to the cavity to be provided in the upper main mold 23A and the lower main mold 23B. In the method, a rectangular cylindrical molding flask 90A is placed on the master mold 90B. Then, casting sand 90, which may include an additive such as bentonite, is filled in the molding flask 90A. The casting sand 90 may then be hardened. In this way, the upper main mold 23A and the lower main mold 23B are produced. Thus, the main mold 23 is a sand mold formed to be collapsed after a single casting. A sand hardening type mold may be used for forming the first split core mold 21 and the second split core mold 22. The sand hardening type mold has a higher dimensional accuracy for casting, as compared to that of the sand mold forming the main mold 23.

As shown in FIG. 5, the producer, after having prepared the main mold 23, vertically separates the upper main mold 23A and the lower main mold 23B of the main mold 23. While the upper main mold 23A and the lower main mold 23B are separated, the producer inserts the second split core mold 22, together with the first split core mold 21, between the upper main mold 23A and the lower main mold 23B. Subsequently, the producer sets the first split core mold 21 and the second split core mold 22 in the cavity 20A. The cavity 20A is a space for setting the first split core mold 21 and the second split core mold 22. Then, the producer joins the upper main mold 23A and the lower main mold 23B of the main mold 23 together. At this time, the producer engages the outer surface of the flat portion 22C of the second split core mold 22 with the inner surface of the cavity 20A. As a result, the second split core mold 22 is fixed in the cavity 20A, so that the split core mold 22 does not substantially move relative to the cavity 20A (not shown).

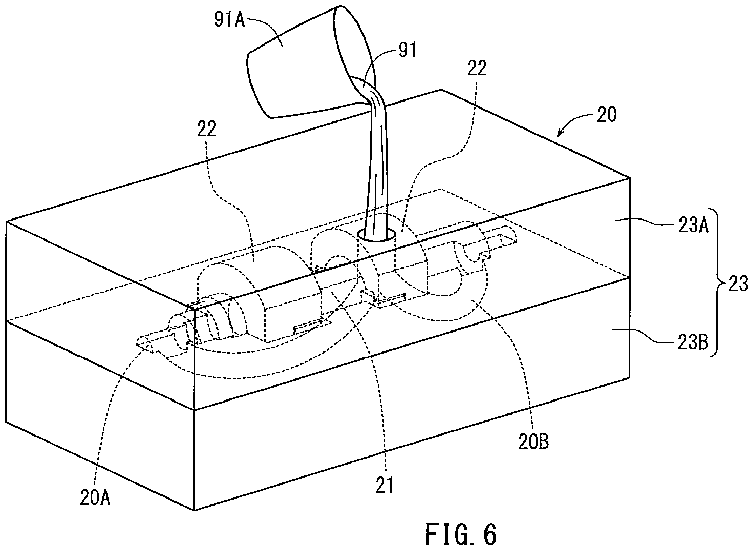

In this way, the second split core molds 22, into which the first split core mold 21 is fitted, is fixed in the main mold 23, so as not be easily moved relative to the main mold 23 (see FIG. 6). Hereinafter, the combination of the first split core mold 21, the second split core mold 22, and the main mold 23 in this state will also be referred to as the "mold assembly 20." Further, the series of steps described above are also referred to herein as the "preparing step," since the mold assembly 20 is prepared in this steps.

As shown in FIG. 6, the producer, who previously performed the preparation steps, prepares a ladle 91A with molten metal 91. The producer may pour the molten metal 91 from the ladle 91A into the runner 20B. The runner 20B may be open on the upper surface of the upper main mold 23A of the mold assembly 20. In this way, the shaft 10 (see FIG. 7) can be cast. In this embodiment, the molten metal 91 is prepared so as to become spheroidal graphite cast iron (ductile cast iron) when it solidifies. The above described step is also referred to hereinafter as a "casting step." In this casting step, the mold assembly 20 becomes unable to maintain its shape due to heat from the molten metal 91. Accordingly, the mold assembly 20 becomes a mountain (not shown) of casting sand.

The producer, after having performed the casting step, removes the shaft 10 from the mountain of casting sand. At this time, the shaft 10 can include an ingot. An ingot can be formed when molten metal 91 remaining in certain locations, such as in the runner 20B, solidifies. In such a case, the producer should separate the ingot from the shaft 10. Additionally, casting sand can be left in the cast hole 11 (see FIG. 1) of the shaft 10. In such a case, the producer may apply an impact force to, tilt, and/or perform blasting on the shaft 10 in order to remove the residual casting sand, for example. At that time, if the producer thinks all the processes in casting deformation of the shaft 10 are not completed, the producer may leave the shaft 10 for a sufficiently long time so as to complete all the processes in the casting deformation.

The producer, after having performed the above processes, prepares a lathe 30. The lathe 30 may be used for turning the shaft 10, the shaft 10 having been obtained by the above casting step and having been taken out of the casting sand. As shown in FIG. 7, the lathe 30 includes a main spindle stock 30A. The main spindle stock 30Ais a holding device capable of holding and rotating an object.

The lathe 30 also includes a swing stop 30B and a tailstock 30C. The swing stop 30B and the tailstock 30C are auxiliary holding devices and may function for suppressing the shake of an object held by the main spindle stock 30A. The swing stop 30B is configured to be appropriately removed from the lathe 30 (see FIG. 8). In FIG. 8, the swing stop 30B is removed from the lathe 30. The tailstock 30C is arranged so as to face the main spindle stock 30A. The tailstock 30C is configured to adjust the distance between it and the tip of the main spindle stock 30A, which is located on the left side in FIG. 7.

Further, the lathe 30 also includes a cutting tool 31A, which is a tool for turning an object rotated by the main spindle stock 30A. The cutting tool 31A is attached to a two-shaft gantry robot 31. The cutting tool 31A is configured to move in the feeding direction (right and left directions in FIG. 7) and in the cutting direction (in the vertical direction in FIG. 7) of the lathe 30.

As shown in FIG. 7, the producer, after having prepared the lathe 30, sets the shaft 10, which was obtained by the casting step described above, within the lathe 30. The shaft 10 may be set so that the longitudinal direction of the shaft 10 is aligned with the feeding direction of the lathe 30 (right and left directions in FIG. 7). At this time, one of the two peripheral wall portions 12A of the shaft 10 may be held by the main spindle stock 30A. The other of the two peripheral wall portions 12A may be held by the swing stop 30B. Further, the producer may contact the tip portion of the shaft 10, which is located opposite (right side in FIG. 7) to the main spindle stock 30A, with the tip portion of the tailstock 30C, which is located on the left side of the tailstock 30C in FIG. 7.

The producer may move the lathe 30 to perform turning of the shaft 10. At this time, the producer may perform centering of the shaft 10, for instance by setting the outer surface of the peripheral wall portion 12A held by the main spindle stock 30A of the lathe 30 as a reference surface. In this way, the producer may perform turning of only a predetermined portion 10A of the shaft 10. In this embodiment, the predetermined portion 10Ais located on the tailstock 30C side of the shaft 10 (right side in FIG. 7). This step is also referred to hereinafter as a "first turning step."

The producer, after having performed the first turning step, removes the shaft 10 from the lathe 30. At this time, only the predetermined portion 10A of the shaft has been turned during the first turning step. Subsequently, the producer removes the swing stop 30B from the lathe 30.

As shown in FIG. 8, the producer, after having removed the swing stop 30B from the lathe 30, sets the shaft 10 in the lathe 30 so that its longitudinal direction is aligned with the feeding direction (right and left direction in FIG. 8) of the lathe 30. At this time, the producer holds the predetermined portion 10A of the shaft 10 by the main spindle stock 30A of the lathe 30. Further, the producer may contact the tip portion of the shaft 10, which is now located opposite to the main spindle stock 30A (right side in FIG. 8), with the tip portion of the tailstock 30C, which is located on the main spindle stock 30A side of the tailstock 30C (left side in FIG. 8).

The producer may move the lathe 30 to perform turning of the shaft 10. At this time, the producer performs centering of the shaft 10 by setting the outer surface of the predetermined portion 10A, which is now being held by the main spindle stock 30A of the lathe 30, as a reference surface. Then, the producer may perform turning of a portion of the shaft 10A other than the predetermined portion 10A of the shaft 10. In this way, the shaft 10 is a finished product. The processing accuracy can be guaranteed, such that the shaft 10 may be used as a motor shaft for a motor (not shown) in an electric vehicle. The above described step corresponds to a "second turning step" in the present disclosure.

According to the above-described steps, a peripheral wall portion 12A, which forms a part of a peripheral wall 12 of the cast hole 11 in a shaft 10 obtained by casting may be formed. The peripheral wall portion 12A may be formed by the first split core mold 21 and the second split core mold 22. Turning of the shaft 10 may be performed by setting the peripheral wall portion 12A as a centering reference. Since the first split core mold 21 is fixed so as not to move with respect to the second split core mold 22, the wall thickness of the peripheral wall portion 12A is defined by the first split core mold 21 and the second split core mold 22. Thus, it is possible to decrease the possibility that the peripheral wall 12 of the cast hole 11 will have an unignorable deviation in wall thickness, which can occur when a shaft 10 having a cast hole 11 is produced by casting techniques.

According to the above-mentioned steps, a portion other than the peripheral wall portion 12A of the shaft 10 obtained by casting may be shaped by a sand mold. The peripheral wall portion 12Amay be shaped by a sand hardening type mold, which has a higher dimensional accuracy of casting than another sand mold. Thus, the use of a sand hardening type mold can improve the dimensional accuracy in casting of the peripheral wall portion 12A, the peripheral wall portion 12A serving as a reference for centering in the turning of the shaft 10. In contrast, a sand mold can be used for casting the shaft 10. As a result, we can achieve a merit such as "lower production costs of a mold compared with a metallic mold." At the same time, we can produce a shaft 10 having improved dimensional accuracy.

According to the above-described mold assembly 20, the shaft 10 is obtained by casting using a mold assembly 20. In the shaft 10, the peripheral wall portion 12A forms at least a part of the peripheral wall 12 of the cast hole 11. The peripheral wall part 12A is formed by the first split core mold 21 and the second split core mold 22. Since the first split core mold 21 is fixed so as not to move relative to the second split core mold 22, the wall thickness of the peripheral wall portion 12A is defined by the first split core mold 21 and the second split core mold 22. Thus, it is possible to decrease the possibility that the peripheral wall 12 of the cast hole 11 has an unignorable deviation in the wall thickness. Such an unignorable deviation can occur when a shaft 10 having a cast hole 11 is produced by casting techniques.

The present disclosure is not limited to the appearance and/or configuration described in the above-described embodiment. Various changes, additions, and/or deletions can be made within the scope of the invention, as defined by the appended claims. For example, various forms as described below can be implemented.
(1) In the method for producing a shaft according to the present disclosure, the execution order of each step is not limited to the order of the embodiment described above. That is, the execution order of each step can be appropriately changed. For example, the main mold may be prepared before preparing the first split core mold and the second split core mold.
(2) The cast hole, which is provided as a hollow structure in the shaft, is not limited to a long cylindrical space. For example, a recess may be provided at the first split core mold to form a convex portion on the casting surface of the cast hole, thereby improving the strength of the peripheral wall portion. According to this method, a convex portion is formed on the casting surface of the cast hole in the shaft obtained by casting using the mold assembly. This convex portion allows for improving the strength of the peripheral wall of the cast hole. In other words, the strength of the peripheral wall in the shaft produced using the mold assembly can be enhanced by the convex portion. Since the cast hole is a hollow structure in the shaft, its casting surface is difficult to visually inspect from the outside. Therefore, it is possible to reinforce the peripheral wall of the cast hole in the shaft. Thus, the strength of the whole shaft can be improved by strengthening the peripheral wall of the cast hole, since the cast hole is a relatively weak portion in the shaft, without significant changes to the appearance and/or weight of the shaft. The shape of the convex portion is not particularly limited. The shape of the convex portion may be, for example, a rib shape in which a portion of the casting surface of the cast hole is raised. Alternatively, the convex portion may be a columnar body extending between the casting surfaces facing each other across the cast hole.
(3) The second split core mold 22 shown in FIG. 6 forms only a peripheral wall portion 12A (see FIG. 2) forming a part of the peripheral wall 12 of the cast hole 11 in the shaft 10 obtained by casting. However, the second split core mold may instead be used to form the whole peripheral wall of the cast hole in the shaft obtained by casting in a state where the first split core mold is fitted into the second split core mold.

## Claims

1. A method for producing a long-length shaft (10) having a cast hole (11) extending in its longitudinal direction as a hollow structure, comprising:
a preparation step of preparing a mold assembly (20) in which a first split core mold (21), which is configured to form a casting surface (11A) of the cast hole (11), is fitted into a second split core mold (22), which is configured to form a peripheral wall portion (12A) forming at least a part of a peripheral wall (12) of the cast hole (11), so that the first split core mold (21) is fixed so as not to move relative to the second split core mold (22), and in which the second split core mold (22), into which the first split core mold (21) is fitted, is then fitted in a main mold (23) configured to form a portion of the shaft (10) other than the peripheral wall portion (12A) and the casting surface (11A) of the cast hole (11) so that the second split core mold (22) is fixed so as not to move relative to the main mold (23);
a casting step of pouring molten metal (91) into the mold assembly (20) so as to cast the shaft (10);
a first turning step where the peripheral wall portion (12A) in the shaft (10) obtained in the casting step is held by a holding device of a lathe (30) so as to turn a predetermined portion of the shaft (10) that is a part of a portion of the shaft other than the peripheral wall portion (12A) of the shaft (10) by setting an outer surface of the peripheral wall portion (12A) as a reference surface; and
a second turning step where the predetermined portion (10A) of the shaft (10) that was turned during the first turning step is held by the holding device of the lathe (30) so as to turn a portion other than the predetermined portion (10A) of the shaft (10) by setting an outer surface of the predetermined portion (10A) as another reference surface,
**characterised in that** the first split core mold (21) comprises a body (21A) having a long columnar shape and a core portion (21B) protruding from said body (21A),
wherein a tip of the core portion (21B) comprises a through tenon (21C),
wherein the second split core mold (22) is generally cylindrically formed so as to form the peripheral wall portion (12A) as generally cylindrical and comprises a tenon groove (22A) configured to correspond to the through tenon (21C), and
wherein the through tenon (21C) is inserted in the tenon groove (22A) such that the first split core mold (21) is fixed so as not to move relative to the second split core mold (22).

2. The method for producing the shaft (10) according to claim 1, wherein:
in the preparation step, the main mold (23) is a sand mold; and
in the preparation step, both the first split core mold (21) and the second split core mold (22) are a sand hardening type mold having a higher dimensional accuracy of casting than the sand mold.

3. A mold assembly (20) used when producing a long-length shaft (10) having a cast hole (11) extending in its longitudinal direction as a hollow structure, comprising:
a first split core mold (21) configured to form a casting surface (11A) of the cast hole (11);
a second split core mold (22) configured to form a peripheral wall portion (12A) forming at least a part of a peripheral wall (12) of the cast hole (11); and
a main mold (23) configured to form a portion of the shaft (10) other than the peripheral wall portion (12A) and the casting surface (11A) of the shaft (10), wherein:
the first split core mold (21) is fitted into the second split core mold (22) so that the first split core mold (21) is fixed so as not to move relative to the second split core mold (22), and
the second split core mold (22) fitted with the first split core mold (21) is fitted into the main mold (23) so that the second split core mold (22) is fixed so as not to move relative to the main mold (23),
**characterised in that** the first split core mold (21) comprises a body (21A) having a long columnar shape and a core portion (21B) protruding from said body (21A),
wherein a tip of the core portion (21B) comprises a through tenon (21C),
wherein the second split core mold (22) is generally cylindrically formed so as to form the peripheral wall portion (12A) as generally cylindrical and comprises a tenon groove (22A) configured to correspond to the through tenon (21C), and
wherein the through tenon (21C) is inserted in the tenon groove (22A) such that the first split core mold (21) is fixed so as not to move relative to the second split core mold (22).

4. The mold assembly (20) according to claim 3, wherein:
the first split core mold (21) is provided with a recess so as to form a convex portion at the casting surface (11A), the convex portion being configured to improve the strength of the peripheral wall (12).

## Patentansprüche

1. Verfahren zur Herstellung einer Langwelle (10), wobei sich ein Kernloch (11) als hohle Struktur in deren Längsrichtung erstreckt, Folgendes umfassend:
einen Vorbereitungsschritt des Vorbereitens einer Formanordnung (20), in welche eine erste Teilkernform (21), die dazu ausgelegt ist, eine Gussfläche (11A) des Kernlochs (11) auszubilden, in eine zweite Teilkernform (22), die dazu ausgelegt ist, einen Umfangswandabschnitt (12A) auszubilden, der zumindest einen Teil der Umfangswand (12) des Kernlochs (11) ausbildet, eingesetzt wird, sodass die erste Teilkernform (21) fixiert ist, sodass sie in Bezug zur zweiten Teilkernform (22) unbeweglich ist, und wobei die zweite Teilkernform (22), in welche die erste Teilkernform (21) eingesetzt ist, anschließend in eine Hauptform (23) eingesetzt wird, die dazu ausgelegt ist, einen Abschnitt der Welle (10) auszubilden, der sich von dem Umfangswandabschnitt (12A) und der Gussfläche (11A) des Kernlochs (11) unterscheidet, sodass die zweite Teilkernform (22) fixiert ist, sodass sie in Bezug zur Hauptform (23) unbeweglich ist;
einen Gießschritt des Gießens geschmolzenen Metalls (91) in die Formanordnung (20), um die Welle (10) zu gießen;
einen ersten Drehschritt, bei dem der im Gießschritt erhaltene Umfangswandabschnitt (12A) in der Welle (10) von einer Haltevorrichtung einer Drehmaschine (30) gehalten wird, um einen festgelegten Abschnitt der Welle (10), der Teil eines Abschnitts der Welle ist, der nicht der Umfangswandabschnitt (12A) der Welle ist (10), durch Einstellen einer Außenfläche des Umfangswandabschnitts (12A) als Bezugsfläche zu drehen; und
einen zweiten Drehschritt, bei dem der festgelegte Abschnitt (10A) der Welle (10), der im ersten Drehschritt gedreht wurde, von der Haltevorrichtung der Drehmaschine (30) gehalten wird, um einen Abschnitt, der nicht der festgelegte Abschnitt (10A) der Welle (10) ist, durch Einstellen einer Außenfläche des festgelegten Abschnitts (10A) als weitere Bezugsfläche zu drehen,
**dadurch gekennzeichnet, dass** die erste Teilkernform (21) einen Körper (21A) mit einer langen Säulenform und einen von dem Körper (21A) vorstehenden Kernabschnitt (21B) umfasst,
wobei die Spitze des Kernabschnitts (21B) einen durchgehenden Zapfen (21C) umfasst,
wobei die zweite Teilkernform (22) im Allgemeinen zylindrisch ausgebildet ist, um den Umfangswandabschnitt (12A) als im Allgemeinen zylindrisch auszubilden, und eine Zapfennut (22A) umfasst, die dazu ausgelegt ist, zum durchgehenden Zapfen (21C) zu passen, und
wobei der durchgehende Zapfen (21C) derart in die Zapfennut (22A) eingesetzt ist, dass die erste Teilkernform (21) fixiert ist, sodass sie in Bezug zur zweiten Teilkernform (22) unbeweglich ist.

2. Verfahren zum Herstellung der Welle (10) nach Anspruch 1, wobei:
die Hauptform (23) im Vorbereitungsschritt eine Sandform ist und
sowohl die erste Teilkernform (21) als auch die zweite Teilkernform (22) im Vorbereitungsschritt sandaushärtende Formen mit einer höheren maßlichen Gussgenauigkeit als die Sandform sind.

3. Formanordnung (20), die zur Herstellung einer Langwelle (10) verwendet wird, wobei sich ein Kernloch (11) als hohle Struktur in deren Längsrichtung erstreckt, Folgendes umfassend:
eine erste Teilkernform (21), die dazu ausgelegt ist, eine Gussfläche (11A) des Kernlochs (11) auszubilden;
eine zweite Teilkernform (22), die dazu ausgelegt ist, einen Umfangswandabschnitt (12A) auszubilden, der zumindest einen Teil der Umfangswand (12) des Kernlochs (11) ausbildet; und
eine Hauptform (23), die dazu ausgelegt ist, einen Abschnitt der Welle (10) auszubilden, der sich von dem Umfangswandabschnitt (12A) und der Gussfläche (11A) des Kernlochs (10) unterscheidet, wobei:
die erste Teilkernform (21) derart in die zweite Teilkernform (22) eingesetzt ist, dass die erste Teilkernform (21) fixiert ist, sodass sie in Bezug zur zweiten Teilkernform (22) unbeweglich ist, und
die in die erste Teilkernform (21) eingesetzte zweite Teilkernform (22) derart in die Hauptform (23) eingesetzt ist, dass die zweite Teilkernform (22) fixiert ist, sodass sie in Bezug zur Hauptform (23) unbeweglich ist,
**dadurch gekennzeichnet, dass** die erste Teilkernform (21) einen Körper (21A) mit einer langen Säulenform und einen von dem Körper (21A) vorstehenden Kernabschnitt (21B) umfasst,
wobei die Spitze des Kernabschnitts (21B) einen durchgehenden Zapfen (21C) umfasst,
wobei die zweite Teilkernform (22) im Allgemeinen zylindrisch ausgebildet ist, um den Umfangswandabschnitt (12A) als im Allgemeinen zylindrisch auszubilden, und eine Zapfennut (22A) umfasst, die dazu ausgelegt ist, zum durchgehenden Zapfen (21C) zu passen, und
wobei der durchgehende Zapfen (21C) derart in die Zapfennut (22A) eingesetzt ist, dass die erste Teilkernform (21) fixiert ist, sodass sie in Bezug zur zweiten Teilkernform (22) unbeweglich ist.

4. Formanordnung (20) nach Anspruch 3, wobei:
die erste Teilkernform (21) mit einer Aussparung versehen ist, um einen konvexen Abschnitt an der Gussfläche (11A) auszubilden, wobei der konvexe Abschnitt dazu ausgelegt ist, die Festigkeit der Umfangswand (12) zu verbessern.

## Revendications

1. Procédé pour produire un arbre de longueur longue (10) ayant un trou de coulée (11) s'étendant dans sa direction longitudinale sous forme de structure creuse, comprenant :
une étape de préparation, de la préparation d'un ensemble moule (20) dans lequel un premier segment de moule central (21), qui est configuré pour former une surface de coulage (11A) du trou de coulée (11), est ajusté dans un second segment de moule central (22), qui est configuré pour former une portion de paroi périphérique (12A) formant au moins une partie d'une paroi périphérique (12) du trou de coulée (11), de telle sorte que le premier segment de moule central (21) est fixé afin de ne pas se mouvoir relativement au second segment de moule central (22), et dans lequel le second segment de moule central (22), dans lequel le premier segment de moule central (21) est ajusté, est alors ajusté dans un moule principal (23) configuré pour former une portion de l'arbre (10) autre que la portion de paroi périphérique (12A) et la surface de coulage (11A) du trou de coulée (11) de telle sorte que le second segment de moule central (22) est fixé afin de ne pas se mouvoir relativement au moule principal (23) ;
une étape de coulage, du versement de métal fondu (91) dans l'ensemble moule (20) afin de couler l'arbre (10) ;
une première étape de tournage où la portion de paroi périphérique (12A) dans l'arbre (10) obtenue dans l'étape de coulage est retenue par un dispositif de retenue d'un tour (30) afin de tourner une portion prédéterminée de l'arbre (10) qui est une partie d'une portion de l'arbre autre que la portion de paroi périphérique (12A) de l'arbre (10) en définissant une surface extérieure de la portion de paroi périphérique (12A) en tant que surface de référence ; et
une seconde étape de tournage où la portion prédéterminée (10A) de l'arbre (10) qui a été tournée durant la première étape de tournage est retenue par le dispositif de retenue du tour (30) afin de tourner une portion autre que la portion prédéterminée (10A) de l'arbre (10) en définissant une surface extérieure de la portion prédéterminée (10A) en tant qu'autre surface de référence,
**caractérisé en ce que** le premier segment de moule central (21) comprend un corps (21A) ayant une forme de colonne longue et une portion centrale (21B) faisant saillie à partir dudit corps (21A),
dans lequel un bout de la portion centrale (21B) comprend un tenon traversant (21C),
dans lequel le second segment de moule central (22) est formé de façon généralement cylindrique afin de former la portion de paroi périphérique (12A) sous forme généralement cylindrique, et comprend une rainure de tenon (22A) configurée pour correspondre au tenon traversant (21C), et
dans lequel le tenon traversant (21C) est inséré dans la rainure de tenon (22A) de manière telle que le premier segment de moule central (21) est fixé afin de ne pas se mouvoir relativement au second segment de moule central (22).

2. Procédé pour produire l'arbre (10) selon la revendication 1, dans lequel :
dans l'étape de préparation, le moule principal (23) est un moule au sable ; et
dans l'étape de préparation, le premier segment de moule central (21) et le second segment de moule central (22) sont tous les deux un moule de type à durcissement au sable ayant une précision dimensionnelle plus élevée de coulage que le moule au sable.

3. Ensemble moule (20) utilisé lors de la production d'un arbre de longueur longue (10) ayant un trou de coulée (11) s'étendant dans sa direction longitudinale sous forme de structure creuse, comprenant :
un premier segment de moule central (21) configuré pour former une surface de coulage (11A) du trou de coulée (11) ;
un second segment de moule central (22) configuré pour former une portion de paroi périphérique (12A) formant au moins une partie d'une paroi périphérique (12) du trou de coulée (11) ; et
un moule principal (23) configuré pour former une portion de l'arbre (10) autre que la portion de paroi périphérique (12A) et la surface de coulage (11A) de l'arbre (10), dans lequel :
le premier segment de moule central (21) est ajusté dans le second segment de moule central (22) de telle sorte que le premier segment de moule central (21) est fixé afin de ne pas se mouvoir relativement au second segment de moule central (22), et
le second segment de moule central (22) ajusté avec le premier segment de moule central (21) est ajusté dans le moule principal (23) de telle sorte que le second segment de moule central (22) est fixé afin de ne pas se mouvoir relativement au moule principal (23),
**caractérisé en ce que** le premier segment de moule central (21) comprend un corps (21A) ayant une forme de colonne longue et une portion centrale (21B) faisant saillie à partir dudit corps (21A),
dans lequel un bout de la portion centrale (21B) comprend un tenon traversant (21C),
dans lequel le second segment de moule central (22) est formé de façon généralement cylindrique afin de former la portion de paroi périphérique (12A) sous forme généralement cylindrique et comprend une rainure de tenon (22A) configurée pour correspondre au tenon traversant (21C), et
dans lequel le tenon traversant (21C) est inséré dans la rainure de tenon (22A) de manière telle que le premier segment de moule central (21) est fixé afin de ne pas se mouvoir relativement au second segment de moule central (22).

4. Ensemble moule (20) selon la revendication 3, dans lequel :
le premier segment de moule central (21) est pourvu d'un évidement afin de former une portion convexe sur la surface de coulage (11A), la portion convexe étant configurée pour améliorer la résistance de la paroi périphérique (12).
